# EUROPÄISCHE PATENTSCHRIFT

(11) **EP 0 841 142 B1**
(45) Veröffentlichungstag und Bekanntmachung des Hinweises auf die Patenterteilung: **01.03.2000**
(21) Anmeldenummer: 97890219.5
(22) Anmeldetag: 04.11.1997
(51) Int. Cl.: B29C 45/27

(54) **Spritzgussform**
Injection mould
Moule d'injection

(30) Priorität: 06.11.1996 AT 193996
(43) Veröffentlichungstag der Anmeldung: 13.05.1998
(73) Patentinhaber: ELMET Elastomere Produktions- und Dienstleistungs-GmbH, 4020 Linz (AT)
(72) Erfinder: Manigatter, Kurt A., 4072 Alkoven (AT)
(74) Vertreter: Babeluk, Michael, Dipl.-Ing. Mag., Patentanwälte Babeluk - Krause

(56) Entgegenhaltungen:
- EP-A- 0 070 925
- EP-A- 0 710 535
- EP-A- 0 783 949
- WO-A-98/12038
- US-A- 2 814 831
- US-A- 3 677 682
- PATENT ABSTRACTS OF JAPAN vol. 12, no. 98 (M-680), 31. März 1988 -& JP 62 233218 A (NOK CORP), 13. Oktober 1987

## Beschreibung

Die Erfindung betrifft eine Spritzgußform gemäß dem Oberbegriff von Patentanspruch 1.

Wärmehärtbare Materialien im Sinne der Erfindung sind im wesentlichen Kunststoffe, die sich bei höheren Temperaturen verfestigen, oder vulkanisierende, elastomere Materialien, wie etwa Silikone oder Kautschuk. Solche Kunststoffe werden bei der Verarbeitung bei niedriger Temperatur über eine Spritzdüse in ein Formnest gespritzt, und vulkanisieren dort unter Wärmeeinfluß zum gewünschten Spritzgußteil aus. Dieses Formnest befindet sich in einer heißen Formplatte. Da sich die Spritzdüse bis in die heiße Formplatte hinein erstreckt, müssen Maßnahmen getroffen werden, um die Temperatur der Spritzdüse niedrig zu halten. Ansonsten würde das Material bereits in der Spritzdüse ausvulkanisieren und diese blockieren. Die Spritzdüse reicht von einer kalten Formplatte über eine Isolierplatte und eine Heizplatte bis zur heißen Formplatte. Sie ist in einer Bohrung angeordnet und allgemein gegenüber der heißen Formplatte isoliert. Am wirksamsten ist eine solche Isolierung durch einen Luftspalt zu lösen.

Im Bereich der Düsenspitze jedoch läßt sich eine mittelbare oder unmittelbare Berührung zwischen Düse und heißer Formplatte naturgemäß nicht umgehen. Durch diese Berührung wird zwangsläufig ein Wärmeübergang hervorgerufen, was sich insbesonders deshalb als ungünstig herausstellt, da eine Kühlung der Düse durch ein Kühlmittel in diesem Bereich nicht zufriedenstellend möglich ist.

Aus der DE-A 31 43 748 ist eine Form zum Spritzgießen bekannt, bei der zwischen der Spritzdüse und der Formplatte ein Druckstück eingefügt ist. Die Abdichtung zwischen Spritzdüse und Druckstück sowie zwischen Druckstück und Formplatte erfolgt dabei jeweils entweder durch das Anliegen zweier Stirnflächen aneinander oder durch eine enge Passung zweier Umfangsflächen. Auf diese Weise wird insbesonders verhindert, daß sich der Spalt zwischen Spritzdüse und Druckstück bzw. zwischen Druckstück und Formplatte nicht mit dem Material füllen kann. Durch eine entsprechende konstruktive Gestaltung und durch die Wahl geeigneter Materialien kann der Wärmeübergang zwischen Formplatte und Düse bei dieser bekannten Anordnung relativ gering gehalten werden. Nachteilig ist jedoch, daß die Abdichtung zwischen den Bauteilen eine Bearbeitung mit höchster Genauigkeit und engen Toleranzen erfordert. Weiters dürfen die Temperaturdifferenzen zwischen den einzelnen Bauteilen nicht zu groß werden, um unterschiedliche Wärmedehnungen zu vermeiden. Daher ist die in dieser Druckschrift offenbarte Lösung sehr aufwendig und mit einer komplizierten Fertigung verbunden.

Weiters ist aus der AT-B 401 253 eine Spritzgußform bekannt, bei der eine Vorkammer vorgesehen ist, in die die Einspritzdüse mündet. Die Vorkammer ist dazu vorgesehen, sich beim Einspritzen mit Gußmaterial zu füllen und dadurch eine Isolierschicht auszubilden. Nachteilig bei dieser Vorrichtung ist die Gefahr, daß das Material in der Vorkammer aufgrund des Wärmeüberganges von der Formplatte her ausvulkanisiert und daß beim nächstfolgenden Guß ein bereits ausvulkanisiertes Material in das Formnest mitgerissen wird, was zu einer Qualitätsminderung des Spritzgußteiles führt.

Eine weitere Lösung ist beispielsweise in der EP-B 0 162 037 offenbart, bei der auf die Düsenspitze eine schmale, dünnwandige Kanüle aufgesetzt ist. Dies stellt jedoch eine sehr filigrane, störanfällige Konstruktion dar, die hohem Verschleiß unterworfen ist. Die zylindrische Abdichtung der Düsenspitze in der Formplatte ist ebenfalls sehr problematisch und erfordert engste Fertigungstoleranzen. Die Kanülenspitze liegt bündig an der Eintrittsöffnung des Formnestes an.

Ferner ist aus der EP-A 344 381 eine Einspritzdüse für thermoplastische Kunststoffe bekannt, bei der ein Zwischenstück zur Verbesserung der Abdichtung vorgesehen ist. Eine solche Düse ist für warmaushärtende Materialien jedoch nicht verwendbar.

Gemäß einem älteren Vorschlag der in der WO 98/12038 A veröffentlicht worden ist, ist eine Einspritzdüse vorgesehen, bei der die Düsenspitze im Bereich der Mündung des Einspritzkanals auf einer Sitzfläche aufliegt. Dadurch wird zwar der Wärmeübergang minimiert, aber es besteht das Problem, daß die Einspritzöffnung nicht beliebig klein gemacht werden kann ohne die Reproduzierbarkeit des Spritzgießverfahrens zu gefährden.

In der US 2 814 831 A ist eine Spritzgießvorrichtung beschrieben, bei der die Einspritzdüse an einer kegelförmigen Sitzfläche zentriert wird. An dieser Sitzfläche findet zwangsläufig ein relativ großer Wärmeübergang statt, der im Fall von wärmehärtbaren Materialien unerwünscht ist. Weiters besteht bei einer solchen Vorrichtung das Problem, daß es durch geringfügige Produktionstoleranzen dazu kommen kann, daß die Einspritzdüse an der Einspritzöffnung nicht dichtend aufsitzt oder im umgekehrten Fall, daß keine ausreichende Führung durch die kegelige Führungsfläche gegeben ist.

Aufgabe der vorliegenden Erfindung ist es, die obigen Nachteile zu vermeiden und eine Spritzgußform zu schaffen, die einfach herstellbar ist und die einen sicheren Betrieb bei verschiedenen Einsatzbedingungen ermöglicht.

Erfindungsgemäß wird diese Aufgabe durch die Merkmale des kennzeichnenden Teils von Patentanspruch 1 gelöst.

Durch den freigestellten Zentrierbund kann einerseits der Wärmeübergang von der Düse zur Formplatte minimiert werden und andererseits ist die vorgeschlagene Lösung weitgehend unabhängig von Produktionstoleranzen. Weiters kann dadurch der Zwischenraum zwischen der Düsenspitze und der Formplatte vollständig gegen den Bereich zwischen den Düsenkörper und der Formplatte abgeschlossen werden. Dadurch wird einerseits zuverlässig der Eintritt von Spritzgußmaterial in den Raum zwischen den Düsenkörper und der Formplatte verhindert, was z.B. bei einer Störung im Anpreßdruck der Fall sein kann und andererseits eine exakte Zentrierung erreicht, welche insbesondere wichtig ist, wenn aus mehreren Düsenspitzen das Spritzgußmaterial in ein und das selbe Formnest eingebracht wird, da nur bei einer sehr exakt gleich großen Eintragsmenge eine einwandfreie Qualität des Produkts erzielt werden kann. Weiters ermöglicht die durch den Zentrierbund gewährleistete exakte Zentrierung der Düsenspitze, daß die Austrittsöffnung der Düsenspitze einen kleineren Durchmesser haben kann, als der Einspritzkanal. Dadurch wird es möglich den Anspritzzapfen am Produkt so gering halten zu können, daß die Produktoberfläche makellos erscheint, auch wenn eine Nachbehandlung im Bereich des Anspritzzapfens unterbleibt. Dies ist insbesondere bei relativ kleinen Spritzgußteilen von besonderem Vorteil.

Durch den Wegfall von Zwischenbauteilen zwischen der Düse und der Formplatte kann die Anzahl der Bauteile verringert werden und es wird die Zuverlässigkeit erhöht.

Durch die Reduzierung einer Auflagefläche zwischen Düsenspitze und Formplatte auf eine Linie wird einerseits die Wärmeübertragung durch Wärmeleitung verringert und andererseits kann durch die erhöhte Flächenpressung eine sichere Abdichtung erreicht werden. Besonders vorteilhaft ist, daß es nicht mehr erforderlich ist, für die Düsenspitze Sondermaterialien, wie etwa Titan od. dgl., zu verwenden.

In einer vorteilhaften Ausführungsvariante der vorliegenden Erfindung ist vorgesehen, daß die Sitzfläche im Bereich der Formplatte sphärisch ausgebildet ist. Besonders im Zusammenwirken mit einer ebenfalls sphärisch ausgebildeten Düsenspitze, deren Krümmungsradius jedoch unterschiedlich zu der der Sitzfläche ist, können günstige Ergebnisse erzielt werden.

In Abhängigkeit von dem zu verarbeitenden Material und von der zu erwartenden Standzeit kann die Düsenspitze als Verschleißteil ausgebildet sein, das am Ende seiner Lebensdauer ausgewechselt wird.

Der Anpreßdruck der Düsenspitze auf die Sitzfläche kann durch verschiedene Maßnahmen erreicht werden. Durch eine Dichtung oder durch entsprechende Federn kann ein gleichbleibender Anpreßdruck erzielt werden. Besonders günstig ist es jedoch, diesen gleichbleibenden Anpreßdruck während des Einspritzvorganges durch eine zusätzliche Druckkraft zu unterstützen, die durch den Einspritzdruck des Materials selbst hervorgerufen wird. Auf diese Weise wird erreicht, daß bei hohen Einspritzdrücken, bei denen an die Abdichtung besonders hohe Anforderungen gestellt werden, eine hohe Auflagekraft der Düsenspitze auf der Sitzfläche erzielt wird.

In einer besonders bevorzugten Ausführungsvariante der vorliegenden Erfindung ist die Düsenspitze beweglich im Bezug auf die Düse ausgebildet, wodurch auch eine leichte Austauschbarkeit der Düsenspitze erreicht wird.

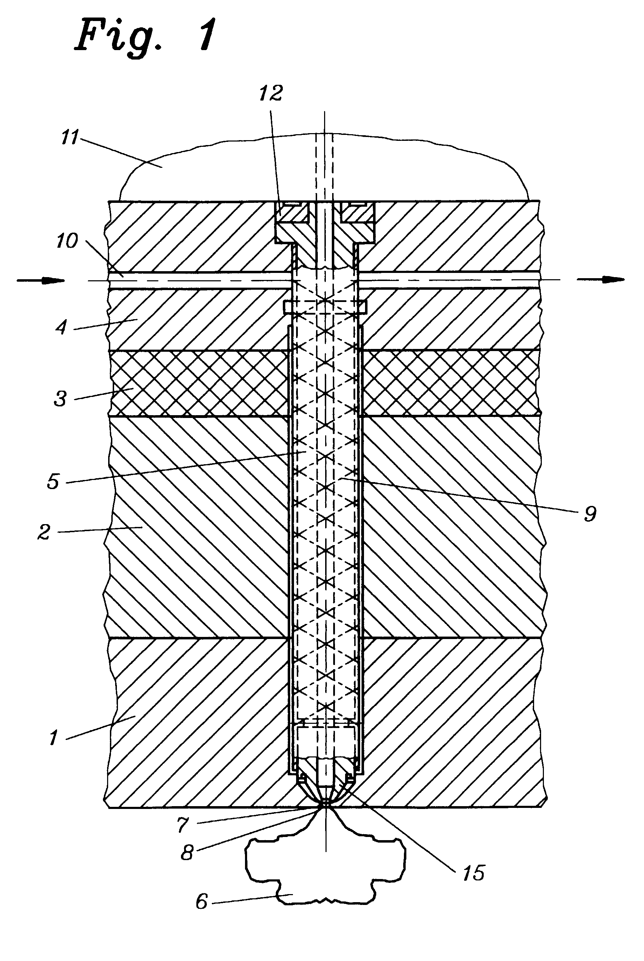

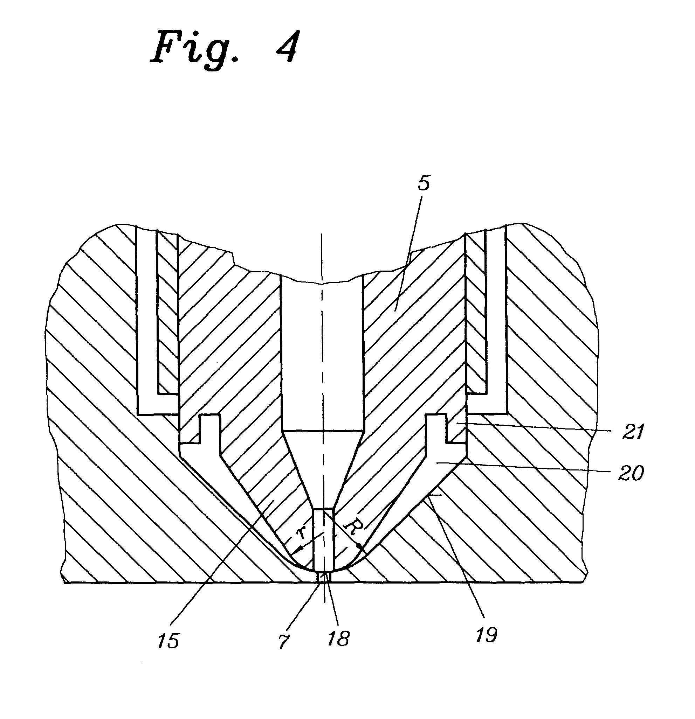

In der Folge wird die Erfindung anhand der in den Figuren dargestellten Ausführungsvarianten näher erläutert. Es zeigen die Fig. 1, 2 und 3 verschiedene Ausführungsvarianten der Erfindung jeweils in einem Längsschnitt sowie Fig. 4 Details einer Ausführungsvariante der Erfindung im Längsschnitt.

Allen Ausführungsvarianten ist gemeinsam, daß eine Formplatte 1, eine Heizplatte 2, eine Temperaturschutzplatte 3 und eine Kühlplatte 4 übereinander angeordnet sind. In einer sich durch diese Bauteile erstreckenden Bohrung ist eine Düse 5 angeordnet, ein Formnest, das sich im Anschluß an die Formplatte 1 befindet, ist mit 6 schematisch angedeutet. Die Formplatte 1 besitzt einen kurzen Einspritzkanal 7, der über eine Einspritzöffnung 8 in das Formnest 6 mündet. Die Düse 5 ist in an sich bekannter Weise mit Kühlkanälen 9 versehen, die sich in Form einer zweigängigen Schnecke am Umfang der Düse 5 erstrecken. In der Kühlplatte 4 ist ein Kanal 10 für ein Kühlmedium vorgesehen, welcher Kanal 10 mit den Kühlkanälen 9 der Düse 5 in Verbindung steht.

Bei der Ausführungsvariante von Fig. 1 erfolgt die Abdichtung der Düse 5 gegenüber einer nicht näher dargestellten Zufuhreinheit 11 über eine Dichtung 12, die beispielsweise aus PTFE hergestellt ist. Diese Dichtung 12 besitzt eine ausreichende Elastizität, um stets für einen passenden Anpreßdruck der Düsenspitze 15 an die Formplatte 1 zu sorgen. Die Dichtung 12 befindet sich dabei in allen Betriebsbedingungen auf einer wohl definierten Temperatur, nämlich der, der Kühlplatte, die gleichzeitig die Temperatur der Düse in diesem Bereich ist. Das Material der Dichtung 12 kann dabei in optimaler Weise auf diese Temperatur ausgelegt werden. Bei dieser Ausführungsvariante ist zu beachten, daß die Elastizität der Dichtung 12 ausreichend groß ist, um eine etwaige unterschiedliche Temperaturdehnung der Düse 5 gegenüber den Bauteilen 1, 2, 3 und 4, in denen sie eingebaut ist, ausgleichen zu können.

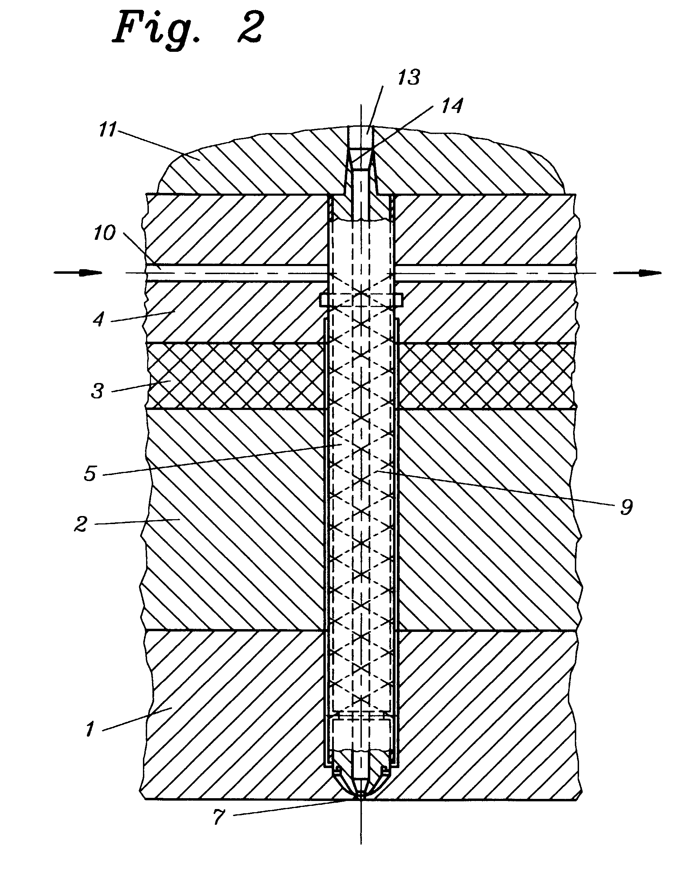

Die Ausführungsvariante der Fig. 2 unterscheidet sich gegenüber der von Fig. 1 dadurch, daß im Bereich der Zufuhröffnung 13 für das Material die Düse 5 einen konisch erweiterten Einlaßabschnitt 14 aufweist. Auf diese Weise wird der Druck des einzuspritzenden Materials in eine nach unten gerichtete Axialkraft umgesetzt, die die Düse 5 an die Formplatte 1 anpreßt.

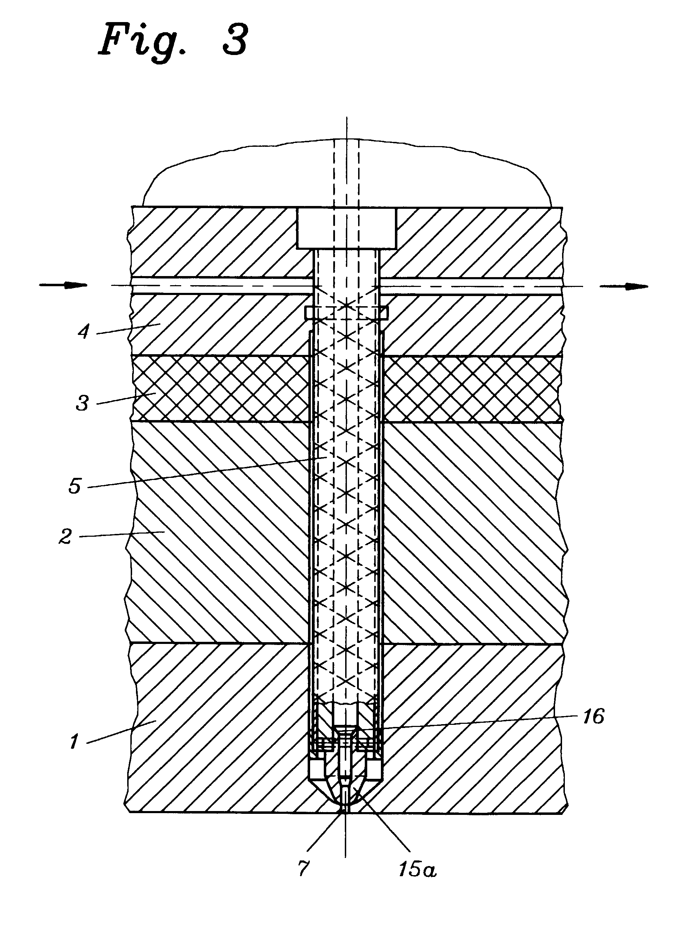

Die Ausführungsvariante der Fig. 3 ist in ihrer Wirkungsweise im wesentlichen analog zu der von Fig. 2. Unterschiedlich ist jedoch, daß die Düsenspitze 15a als eigener Bauteil ausgeführt ist, der gegenüber der eigentlichen Düse 5 in Axialrichtung beweglich ist. Die Düsenspitze 15a besitzt ihrerseits eine konische Einlaßöffnung 16, die wiederum den Druck des einzuspritzenden Materials in eine Axialkraft umsetzt, die auf die Düsenspitze 15a wirkt. Der Vorteil dieser Ausführungsvariante liegt in der leichten Austauschbarkeit der Düsenspitze 15a.

In der Fig. 4 ist der Bereich der Düsenspitze zum besseren Verständnis detailliert dargestellt. Es ist ersichtlich, daß am Ende des Einspritzkanals 7 eine Sitzfläche 18 in der Formplatte 1 ausgebildet ist, die rund um den Einspritzkanal 7 sphärisch ausgebildet ist, mit einem Krümmungsradius R. Anschließend an diese Sitzfläche 18 folgt ein konischer Abschnitt 19. Die Düsenspitze 15 ist ebenfalls sphärisch ausgebildet, und zwar mit einem Krümmungsradius r, der kleiner ist, als der Krümmungsradius R der Sitzfläche 18. Auf diese Weise erfolgt eine Berührung zwischen Düsenspitze 15 und Sitzfläche 18 entlang einer Kreislinie. Ein Spalt 20 in den übrigen Abschnitten dient der thermischen Isolierung. An der Düse 5 ist weiters ein Zentrierungsbund 21 angeformt, der freigestellt ist, um den Wärmeübergang von der Formplatte 1 her zu minimieren.

Die vorliegende Erfindung ermöglicht eine robuste und verschleißfeste Konstruktion einer Spritzgußform, mit geringen Ansprüchen an die Fertigungstoleranzen. Insbesonders kann der Anspritzpunkt, der direkt in der Formplatte liegt, und kein Teil der Düse ist, extrem klein gehalten werden, was eine Anspritzung an dünnsten Wandstärken ermöglicht.

Der einfache Aufbau der Erfindung ermöglicht eine geschlossene Anordnung der Düse und der heißen Formplatte, ohne jedoch in direktem Kontakt mit dem Formnest zu stehen und ohne die Verbindung einer zusätzlichen Büchse aus Sonderwerkstoffen.

## Patentansprüche

1. Spritzgußform für plastische wärmehärtbare Materialien, mit einer Formplatte (1), die einen Einspritzkanal (7) aufweist, der in eine Einspritzöffnung (8) mündet, und mit einer thermisch gegenüber der Formplatte (1) isolierten Einspritzdüse (5), die sich zumindest teilweise in einer Bohrung in der Formplatte (1) erstreckt, die im wesentlichen konzentrisch zum Einspritzkanal verläuft, wobei die Einspritzdüse (5) eine im wesentlichen konische Düsenspitze (15, 15a, 15b) aufweist und wobei im Bereich der Mündung des Einspritzkanals (7) in die Bohrung eine Sitzfläche (18) vorgesehen ist, auf der die Düsenspitze (15, 15a, 15b) mit Druck in Axialrichtung der Düse aufliegt, wobei die Berührung zwischen der Düsenspitze (15, 15a, 15b) und der Sitzfläche (18) entlang einer Linie erfolgt, **dadurch gekennzeichnet,** daß im Übergangsbereich vom Düsenkörper (5) zur Düsenspitze (15, 15a, 15b) ein Zentrierbund (21) angeformt ist, der freigestellt ist und mit einem Teil seiner Außenflanke flächig an der senkrechten Fläche einer aus der Formplatte (1) ragenden Stufe anliegt.

2. Spritzgußform nach Anspruch 1, **dadurch gekennzeichnet**, daß die Sitzfläche (18) im wesentlichen sphärisch ausgebildet ist.

3. Spritzgußform nach Anspruch 2, **dadurch gekennzeichnet**, daß die Düsenspitze sphärisch ausgebildet ist, wobei die Krümmungen (R, r) von Sitzfläche (18) bzw. Düsenspitze (15, 15a, 15b) unterschiedlich zueinander sind.

4. Spritzgußform nach einem der Ansprüche 1 bis 3, **dadurch gekennzeichnet**, daß die Düsenspitze (15b) als Verschleißteil ausgebildet ist.

5. Spritzgußform nach einem der Ansprüche 1 bis 4, **dadurch gekennzeichnet**, daß die Düse (5) mit Kühlkanälen (9) ausgeführt ist.

6. Spritzgußform nach einem der Ansprüche 1 bis 5, **dadurch gekennzeichnet**, daß im Bereich einer Zufuhröffnung der Düse (5) eine Dichtung (12) vorgesehen ist, die dazu ausgebildet ist, im zusammengebauten Zustand einen Druck in Axialrichtung auf die Düse (5) auszuüben.

7. Spritzgußform nach einem der Ansprüche 1 bis 6, **dadurch gekennzeichnet**, daß im Bereich der Düse (5) eine Druckaufnahmefläche (14, 16) vorgesehen ist, die dazu ausgebildet ist, durch den Druck des Materials eine in Axialrichtung wirkende Kraft auf die Düsenspitze (15, 15a, 15b) zu erzeugen.

8. Spritzgußform nach einem der Ansprüche 1 bis 7, **dadurch gekennzeichnet**, daß Federn (17, 27) vorgesehen sind, um die Düsenspitze (15, 15a, 15b) in Axialrichtung vorzuspannen.

9. Spritzgußform nach einem der Ansprüche 1 bis 8, **dadurch gekennzeichnet**, daß die Düsenspitze (15a) in Axialrichtung beweglich ausgeführt ist.

## Claims

1. An injection mould for plastic thermosettable materials, with a moulding plate (1) having an injection duct (7) opening into an injection aperture (8) and with an injection nozzle (5) which is thermally insulated from the moulding plate (1) and extends at least partly into a bore in the moulding plate (1) which extends substantially concentrically to the injection duct, with the injection nozzle (5) being provided with a substantially conical nozzle tip (15, 15a, 15b) and with a seat (18) being provided in the zone of the mouth of the injection duct (7) on which the nozzle tip (15, 15a, 15b) rests with pressure in the axial direction of the nozzle, with the contact between the nozzle tip (15, 15a, 15b) and the seat (18) occurring along a line, characterized in that a centering collar is tip-stretched in the transitional zone from the nozzle body (5) to the nozzle tip (15, 15a, 15b), which collar is free-standing and rests with a portion of its outside flank planarly on the perpendicular surface of a step projecting from the moulding plate (1).

2. An injection mould as claimed in claim 1, characterized in that the seat (18) is arranged substantially spherically.

3. An injection mould as claimed in claim 2, characterized in that the nozzle tip is arranged spherically, with the curvatures (R, r) of the seat (18) and the nozzle tip (15, 15a, 15b) being mutually different.

4. An injection mould as claimed in one of the claims 1 to 3, characterized in that the nozzle tip (15b) is arranged as a wearing part.

5. An injection mould as claimed in one of the claims 1 to 4, characterized in that the nozzle (5) is provided with cooling ducts (9).

6. An injection mould as claimed in one of the claims 1 to 5, characterized in that a seal (12) is provided in the zone of a feed opening of the nozzle (5), which seal is arranged so as to exert a pressure in the axial direction onto the nozzle (5) in the assembled state.

7. An injection mould as claimed in one of the claims 1 to 6, characterized in that a pressure absorption area (14, 16) is provided in the zone of the nozzle (5), which absorption area is arranged so as to produce a force acting in the axial direction upon the nozzle tip (15, 15a, 15b) by the pressure of the material.

8. An injection mould as claimed in one of the claims 1 to 7, characterized in that springs (17, 27) are provided in order to pretension the nozzle tip (15, 15a, 15b) in the axial direction.

9. An injection mould as claimed in one of the claims 1 to 8, characterized in that the nozzle tip (15a) is movably arranged in the axial direction.

## Revendications

1. Moule pour injection pour des matériaux plastiques thermodurcissables comprenant une plaque de moule (1) présentant un canal d'injection (7) débouchant dans une ouverture d'injection (8), et comprenant une buse d'injection (5) thermiquement isolée par rapport à la plaque de moule (1) et qui s'étend au moins partiellement dans un alésage de la plaque de moule (1), qui s'étend pour l'essentiel de façon concentrique par rapport au canal d'injection, la buse d'injection (5) présentant une pointe de buse (15, 15a, 15b) pour l'essentiel conique, et une surface d'appui (18) étant prévue dans la zone d'embouchure du canal d'injection (7), dans l'alésage, la pointe de buse (15, 15a, 15b) s'appuyant avec pression sur ladite surface d'appui dans le sens axial, le contact entre le pointe de buse (15, 15a, 15b) et la surface d'appui (18) s'effectuant le long d'une ligne, caractérisé en ce que dans la zone de passage depuis le corps de buse (5) vers la pointe de buse (15, 15a, 15b) est moulé un collet de centrage (21) qui est libre et dont une partie du flanc extérieur est en appui plan contre la face verticale d'un palier saillant de la plaque de moule (1).

2. Moule pour injection selon la revendication 1, caractérisé en ce que la surface d'appui (18) présente une forme sensiblement sphérique.

3. Moule pour injection selon la revendication 2, caractérisé en ce que les courbures (R, r) de la surface d'appui (18) ou de la pointe de buse (15, 15a, 15b) sont différentes les unes des autres.

4. Moule pour injection selon l'une des revendications 1 à 3, caractérisé en ce que la pointe de buse (15b) est une pièce d'usure.

5. Moule pour injection selon l'une des revendications 1 à 4, caractérisé en ce que la buse (5) présente des canaux de refroidissement (9).

6. Moule pour injection selon l'une des revendications 1 à 5, caractérisé en ce que dans la zone d'une ouverture d'alimentation de la buse (5) est prévu un joint (12) servant à exercer, dans l'état assemblé, une pression dans le sens axial sur la buse (5).

7. Moule pour injection selon l'une des revendications 1 à 6, caractérisé en ce que dans la zone de la buse (5) est prévue une face de réception de pression (14, 16) servant à produire par la pression du matériau un effort agissant dans le sens axial sur la pointe de buse (15, 15a, 15b).

8. Moule pour injection selon l'une des revendications 1 à 7, caractérisé en ce que des ressorts (17, 27) sont prévus pour précontraindre la pointe de buse (15, 15a, 15b) dans le sens axial.

9. Moule pour injection selon l'une des revendications 1 à 8, caractérisé en ce que la pointe de buse (15a) est mobile dans le sens axial.
